# EUROPEAN PATENT APPLICATION

(11) **EP 0 877 509 A2**
(43) Date of publication of application: **11.11.1998**
(21) Application number: 98303278.0
(22) Date of filing: 28.04.1998
(51) Int. Cl.: H04L 9/18

(54) **Data encyrption/decryption method and apparatus**

(30) Priority: 08.05.1997 GB 9709311
(71) Applicant: INTERNATIONAL BUSINESS MACHINES CORPORATION, Armonk, NY 10504 (US)
(72) Inventor: Trotter, Martin John, 2 Broadgate Cottages, Romsey, Hampshire S051 9BX (GB)
(74) Representative: Moss, Robert Douglas

(57) **Abstract**

A data encryption method includes steps of generating a random key; mixing this random key with clear data to be encrypted; combining the result of the mixing step with the random key; and mixing the result of the combining step with a shared private key.

## Description

### Field of the Invention

The present invention relates to the field of data communications, and more particularly to the encryption of data before it is communicated, so that this data is made more difficult to intercept by unintended recipients.

### Background of the Invention

Organizations in both the public and private sectors have become increasingly dependent on electronic data processing. Vast amounts of digital data are now gathered and stored in large computer data bases and transmitted between computers and terminal devices linked together in complex communications networks. Without appropriate safeguards, this data is susceptible to interception (e.g., via wire taps) during transmission. This could lead to unwanted exposures of data and potential invasions of privacy. Data is also susceptible to unauthorized deletion, modification, or addition during transmission. This can lead to illicit access to computing resources and services, falsification of personal data or business records, or the conduct of fraudulent transactions, including increases in credit authorizations, modifications of funds transfers, and the issuance of unauthorized payments.

Legislatures, recognizing that the confidentiality and integrity of certain data must be protected, have passed laws to help prevent these problems. But laws alone cannot prevent attacks or eliminate threats to data processing systems. Additional steps must be taken to preserve the secrecy and integrity of computer data. Cryptography, which embraces methods for rendering data unintelligible ("encrypting" the data) to unauthorized parties, has become quite common in this regard.

Cryptography is the only known practical method for protecting information transmitted through communications networks that use land lines, communications satellites, and microwave facilities. Cryptographic methods can also be used for message authentication, digital signatures, and personal identification for authorizing electronic funds transfer and credit card transactions (e.g., over a data communications network such as the Internet).

Typically, data encryption involves, at the data transmission end, taking a piece of data which is to be transmitted and mixing this data with a key. The strength of the encryption (i.e., how hard it is to decipher) is directly proportional to the degree of mixing of the data and key. The DES (Data Encryption Standard) is a very common way to mix the data and key. However, concerns over the weakness of DES have led to the use of "triple DES" where the mixing algorithm is run three times on the same data and key. Of course, this adds much computational complexity to the encryption process and thus few installations routinely encrypt all data to be transmitted (only selected data is encrypted). The non-encrypted data is thus susceptible to unintentional interception.

There is, therefore, a tradeoff which must be faced. A complex encryption leads to a highly secure data transmission, but more resources must be spent to perform the encryption. If a simple mixing technique is used (e.g., an exclusive-OR operation) then it is very easy to break the encryption by unintentional interception, however, the use of such a simple mixing is highly desirable, as very little computation is necessary to do the mixing.

### Disclosure of the Invention

According to one aspect, the present invention provides a data encryption method having steps of generating a random key; mixing this random key with clear data to be encrypted; combining the result of the mixing step with the random key; and mixing the result of the combining step with a shared private key.

Preferably, each mixing is an exclusive OR operation and the random key generating step is dependent on the private key.

According to a second aspect, the invention provides a data encryption method having steps of generating a random key; mixing this random key with clear data to be encrypted; and combining the result of the mixing step with the random key by interleaving the random key into the result of the mixing step.

Preferably, the method further includes the step of mixing the result of the combining step with a shared private key. Further preferably, in the combining step the interleaving is dependent on the private key, and the mixing is an exclusive OR operation.

According to third and fourth aspects of the invention, data encryption circuits are provided which include circuitry for performing the functions recited in the method steps discussed above with respect to the first and second aspects of the invention.

According to a fifth aspect, the invention provides data decryption methods for decrypting data encrypted according to the data encrypting methods of the first and second aspects of the invention, having steps of receiving an encrypted signal; mixing the received encrypted signal with the shared private key; performing a separation operation on the result of the immediately preceding mixing step to separate out the random key and an intermediate decrypted result; and performing a further mixing step on the random key and the intermediate decrypted result to obtain the clear data.

According to a sixth aspect, the invention provides data decryption circuits for decrypting data encrypted according to the data encrypting circuits of the third and fourth aspects of the invention, the decryption circuits having: means for receiving an encrypted signal; means for mixing the received encrypted signal with the shared private key; means for performing a separation operation on the result of the immediately preceding means for mixing to separate out the random key and an intermediate decrypted result; and means for performing a further mixing step on the random key and the intermediate decrypted result to obtain the clear data.

Thus, with the present invention, as the data is in a very random state prior to the last level of encryption, a very simple encryption (mixing) technique can be used, such as exclusive-OR, with the private key, yet still produce a result which is very difficult to decipher. This greatly reduces computation complexity during encryption while still giving a highly secure result.

### Brief Description of the Drawing

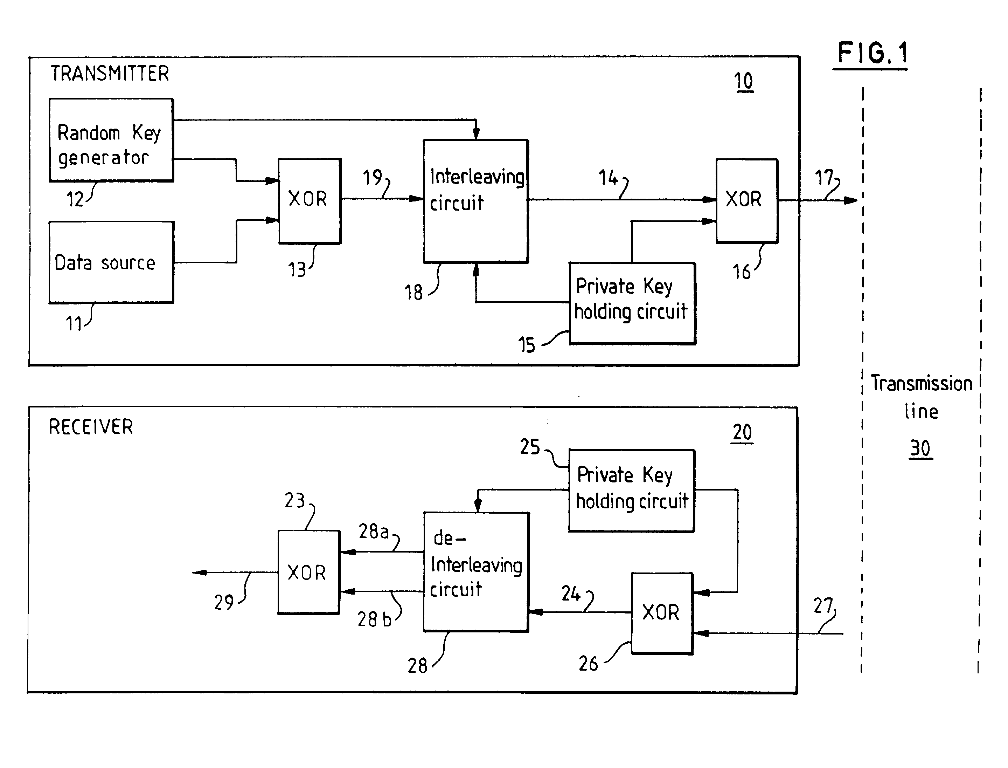

Figure 1 is a block diagram of the circuitry involved in the encryption circuit at a transmitter and a decryption circuit involved at a receiver according to a preferred embodiment of the present invention.

### Detailed Description of the Preferred Embodiments

At the Transmitter 10 of a communications system, an encryption circuit has a data source 11 for outputting data to be sent to a particular receiver. The data output from data source 11 is provided as an input to an exclusive-OR (XOR) logic circuit 13. A random key generator circuit 12 generates a random key which is provided as a second input to the XOR logic circuit 13. The random key is unknown to the Receiver 20.

In order to inform the Receiver 20 of the value of the random key so that decryption will be possible, XOR logic circuit 13 provides a simple mixing of the data and random key and provides an encrypted output on line 19 which is in turn provided as a first input to an interleaving circuit 18. Interleaving circuit 18 receives a second input from the output of random key generator 12 of the same random key that was provided as an input to XOR 13. Interleaving circuit 18 then performs an interleaving operation of the output 19 of XOR 13 and the random key. This interleaving operation divides up the random key into equal portions of one byte each and inserts a one-byte portion of the random key in between every group of N bytes of the output 19 of XOR 13. N is a function of a private key (which will be explained below) so circuit 18 receives an additional input from a private key holding circuit 15.

The output 14 of interleaving circuit 18 is then provided as a first input to a second XOR logic circuit 16. XOR logic circuit 16 receives a second input from a private key holding circuit 15, which outputs a private key having a particular value depending on the intended recipient of the data. As is well known with private key encryption, each transmitter/receiver pair has their own private key which they keep as a secret known (hopefully) only to them. XOR logic circuit 16 provides a simple mixing of the private key and the output of XOR circuit 13 to provide an encrypted result on line 17, which is then transmitted over a transmission line 30 (e.g., the Internet) to the Receiver 20.

The Receiver 20 receives the encrypted result 27 from the transmission line 30 and directs it to an input of an XOR 26, which receives a second input from a private key holding circuit 25. The Transmitter 10 and Receiver 20 have agreed to use a shared private key in communicating data so each stores the private key in its respective holding circuit (15 and 25) for use in communications between this particular transmitter and this particular receiver.

The output of XOR 26 is provided to a de-interleaving circuit 28 which provides an opposite function to interleaving circuit 18. That is, de-interleaving circuit 28 separates out the items that were interleaved by interleaving circuit 18. After every N bytes of data received on line 24, circuit 28 takes the next byte as a portion of the random key (the exact opposite of the interleaving that took place at circuit 18). In this way, circuit 28 provides two outputs: one on line 28a is the random key and the other on line 28b is the remainder of the data from line 24 that had the random key inter-leaved therein. The outputs 28a and 28b are then supplied to XOR 23 which provides the decrypted (plain or clear) data on line 29.

Since the data at line 14 in the transmitter is so random in nature (due to the XOR'ing with the random key and the subsequent interleaving) a very simple private key mixing technique (XOR) can be used. Thus providing for simple mixing along with highly secure encryption.

The Receiver, according to the invention, shares two secrets with the Transmitter. The private key is shared as are the details of the combining (a specific interleaving--with a specific value of N-- in the preferred embodiment) of the random key with the first level of encryption. The details of the combining is preferably some function of the private key, so that therefore the two secrets shared between Transmitter and Receiver are not totally independent. For example, if the interleaving involves inserting a byte of the key every N bytes of the message, N is a function of the private key. For this reason, the private key from circuit 15 is supplied to the circuit 18 so that the circuit 18 can perform interleaving using the proper value of N based on the value of the private key.

If the two secrets are totally independent, then the Transmitter 10 must adjust the interleaving circuit (independent of any key) and dependent only on a pre-agreed interleaving (agreed in advance between the Transmitter 10 and Receiver 20). The interleaving can also be not directly pre-agreed but instead a function to obtain the interleaving is pre-agreed. For example, the interleaving can be agreed to be a function of the XOR'd data length that is output of the XOR 13. In this case, there must be a way of knowing the random key length at the Receiver 20. A fixed length random key can be agreed (which would be most appropriate if the XOR 13 were replaced with a DES algorithm), or a variable length random key can be agreed with the length made dependent on the shared private key (thus bringing back the dependence relationship between the two secrets). This latter technique would require the random key generator 12 to have an input supplied thereto from the private key holding circuit 15 and the generator 12 to produce a random key having a length dependent on the shared private key.

The combining which takes place at circuit 18 could also be a more simple operation than interleaving, such as just adding the random key to the end of the output 19 of XOR 13. The circuit 28 would then simply take off the random key from the end of the data received at line 24 and provide it on line 28a to XOR 23. In this case, the circuit 28 would have to be able to deduce the length of the random key so that it could properly separate the random key from the other data on line 24. This could be done by choosing a fixed length random key, as discussed above. This could also be done by using a variable length random key and making the random key length be a function of the private key (as also discussed above).

The encryption technique according to the present invention results in a technique which should be unbreakable since the random key acts in the same way as the classic "one-time pad" (the only known technique of totally secure communications). As the random key is never re-used and undeducible by anyone but the sender it provides an essentially random relationship between the data and the outgoing message.

## Claims

1. A data encryption method comprising steps of:
generating a random key;
mixing this random key with data to be encrypted;
combining the result of the mixing step with the random key; and
mixing the result of the combining step with a shared private key.

2. The method of claim 1 wherein said combining step is dependent on said private key.

3. The method of any preceding claim wherein each mixing is an exclusive OR operation.

4. A data encryption method comprising steps of:
generating a random key;
mixing this random key with data to be encrypted; and
combining the result of the mixing step with the random key by interleaving said random key into the result of said mixing step.

5. The method of claim 4 including the further step of mixing the result of the combining step with a shared private key.

6. The method of claim 5 wherein in said combining step the interleaving is dependent on said private key.

7. The method of claim 4, 5 or 6 wherein each mixing is an exclusive OR operation.

8. A data encryption circuit comprising:
means for generating a random key;
means for mixing this random key with data to be encrypted;
means for combining the result of the mixing with the random key; and
means for mixing the result of the combining with a shared private key.

9. The circuit of claim 8 wherein said means for combining is dependent on said private key.

10. The circuit of claim 8 or 9 wherein each of said means for mixing performs an exclusive OR operation.

11. A data encryption circuit comprising:
means for generating a random key;
means for mixing this random key with data to be encrypted; and
means for combining the result of the mixing with the random key by interleaving said random key into the result of said mixing.

12. The circuit of claim 11 further including means for mixing the result of the combining with a shared private key.

13. The circuit of claim 11 or 12 wherein in said means for combining the interleaving is dependent on said private key.

14. The circuit of claim 11, 12 or 13 wherein each of said means for mixing performs an exclusive OR operation.

15. A data decryption method for decrypting data encrypted according to any preceding data encrypting method claim, comprising steps of:
receiving an encrypted signal;
mixing said received encrypted signal with said shared private key;
performing a separation operation on the result of said immediately preceding mixing step to separate out said random key and an intermediate decrypted result; and
performing a further mixing step on said random key and said intermediate decrypted result to obtain decrypted data.

16. A data decryption circuit for decrypting data encrypted according to any preceding data encrypting circuit claim, comprising:
means for receiving an encrypted signal;
means for mixing said received encrypted signal with said shared private key;
means for performing a separation operation on the result of said immediately preceding means for mixing to separate out said random key and an intermediate decrypted result; and
means for performing a further mixing step on said random key and said intermediate decrypted result to obtain decrypted data.
